# EUROPEAN PATENT SPECIFICATION

(11) **EP 4 108 861 B1**
(45) Date of publication and mention of the grant of the patent: **03.01.2024**
(21) Application number: 22180640.9
(22) Date of filing: 23.06.2022
(51) Int. Cl.: E05B 53/00, E05C 9/10

(54) **MOTION MULTIPLICATION DEVICE FOR WINDOWS OR DOORS**
BEWEGUNGSMULTIPLIKATIONSVORRICHTUNG FÜR FENSTER ODER TÜREN
DISPOSITIF DE MULTIPLICATION DE MOUVEMENT POUR FENÊTRES OU PORTES

(30) Priority: 25.06.2021 IT 202100016772
(43) Date of publication of application: 28.12.2022
(73) Proprietor: MASTERLAB S.R.L., 70014 Conversano (BA) (IT)
(72) Inventor: LOPERFIDO, Michele, 70013 Castellana Grotte (BA) (IT)
(74) Representative: Cosenza, Simona

(56) References cited:
- DE-B- 1 095 709
- FR-A1- 2 435 586
- GB-A- 2 337 556
- US-A1- 2006 180 449

## Description

The present invention refers to a motion multiplication device for windows and doors, and in particular to a motion multiplication device that constitutes a component of the kinematic chain for transmitting motion from a control lever or handle of a window or door to the closing element or to a manoeuvring element that is part of the hardware that accompanies the window and door.

In the sector of the windows and doors, the use of handles is in fact well known, which are applied to the profile that forms the casement (understood as that part of the sash of a window or door that, during closure, matches with the doorframe, the sill and the lintel, or with another sash) and the rotation of which controls, by means of a special movement device, the sliding of one or more manoeuvring or closing rods housed in the same profile.

These rods, in turn, can control or form closing/manoeuvring elements of the window or door; they, for example, can move the so-called "closure points" (lugs, tips or pawls) that fit in corresponding abutments of the fixed frame.

The movement device - which, in the jargon of the sector, is known as a "machine" - supports and contains a rotor, which is provided with a seat for coupling with the "square pin" of the handle, and a mechanism that allows to transform the rotary motion of the rotor into translatory motion of one or two slides, which in turn can be coupled with a respective manoeuvring or closing rod. If there is only one slide that controls a respective rod, the movement device is called "one-way"; if two slides are envisaged controlling each a respective rod and which are movable in opposite directions along parallel directions, the movement device is called "two-way".

In the movement devices of the known type, the rotor consists of a sprocket that meshes one or two racks that are faced each other, extend in a direction parallel or coincident with the direction of translation of the slides and each of which is fixed to or in any case realized as one piece with a respective slide.

The movement devices of known type are mounted in the profile that forms the casement of the window or door; this imposes limitations on the overall dimensions of these movement devices. In particular, the transverse dimension of these movement devices, i.e. the dimension of them extending in a direction orthogonal to the sliding direction of the slides, must be contained within predetermined limits imposed by the shape and by the dimensions of the seat of the profile within which the same movement device is housed.

For this reason, the sprocket has a small diameter, which is reflected in a reduced height of its teeth, which is even more marked if it has to mesh with two instead of just one rack.

However, due to the small dimensions, these movement devices of known type are only able to generate limited movement ranges of the members they control, and in particular of the aforesaid "closing points", with the consequence that often, due to the mechanical plays normally present among the movable components of a window or door, the same is not closed satisfactorily.

In fact, a normal handle of the cremone or "hammer" type moves the relative rod for a longitudinal range, or stroke, equal to about 17 mm, a range that, in some cases, may not be sufficient to properly close the window or door.

Furthermore, the repeated cyclical opening/closing of the window and door leads to wear and tear of the closing points themselves and/or of the respective abutment seats, to the extent that, due to the already limited movement ranges, the closing points no longer engage, if at all partially, with the respective abutments or seats, with the consequence that the window and door is no longer closed properly. Think, for example, of the closure tips that, during closure, penetrate into corresponding seats obtained in the fixed frame, or in the sill, or in the lintel. The wear of the tip or the enlargement of the respective seat may be such that the limited range of the closing movement of the tip is no longer sufficient to close the window or door.

The respective documents DE 10 95 709 B, GB 2 337 556 A, FR 2 435 586 A1 and US 2006/180449 A1 disclose a motion transmission/multiplication device for windows or doors comprising a plurality of balls recirculating along a ring path, said ring path being defined in a containment body said balls being configured to recirculate within said ring path following an advancement motion of a driving element, said recirculation movement of said balls within said ring path being adapted to transmit a further relative motion to a driven element, whereby said driven element advances by essentially the same amount of advancement as said driving element.

The general aim of the present invention is to devise a motion multiplication device that allows to increase the range of movement of the control/manoeuvring members of the closure and opening of a window or door.

Within the scope of this general aim, it is an aim of the present invention to devise a motion multiplication device that can also be applied to existing windows and doors, improving their performance that has been reduced over time.

Another aim of the present invention is to provide a motion multiplication device that is mechanically robust and introduces minimal frictional forces into the kinematic chain for transmitting motion.

It is another aim of the present invention to realize a particularly simple and functional motion multiplication device, with contained costs.

These aims according to the present invention are achieved by realizing a motion multiplication device for windows and doors as set forth in claim 1.

Such a motion multiplication device according to the invention differs from the state of the art essentially in that:
- the containment body, which defines the ring path, is adapted to move forward as a consequence of a thrust applied to it,
- the balls being configured to recirculate within said ring path following said advancement motion of said containment body,
- the driven element advances by an amount greater than the amount of advancement of the containment body.

Further features are specified in the dependent claims.

The features and advantages of a motion multiplication device according to the present invention will be more apparent from the following description, which is to be understood as exemplifying and not limiting, with reference to the schematic attached drawings, wherein:
Figures 1 and 1a are axonometric views of a first embodiment of a motion multiplication device according to the present invention, in a retracted and extended configuration, respectively;
Figures 2 and 2a are plan views from the top of the device in Figures 1 and 1a in a retracted and extended configuration, respectively;
Figures 3 and 3a are side elevation views of the device of Figures 1 and 1a in a retracted and extended configuration, respectively;
Figures 4 and 4a are plan views from the bottom of the device in Figures 1 and 1a in a retracted and extended configuration, respectively;
Figures 5 and 5a are axonometric and exploded views of the device in Figures 1 and 1a in a retracted and extended configuration, respectively;
Figure 6 is an axonometric view of the device of Figure 1 assembled to a sash of a window or door;
Figures 7 and 7a are axonometric and exploded views of the device as illustrated in Figure 6 in a retracted and extended configuration, respectively, i.e. in an open and closed configuration of the sash of the window and door to which the device is assembled;
Figures 8 and 8a are axonometric views, from above, of a second embodiment of a motion multiplication device according to the present invention, in a retracted and extended configuration, respectively;
Figure 9 is an axonometric and exploded view, from above the device in Figure 8, in a retracted configuration;
Figures 10 and 10a are axonometric and exploded views, from below, of the device in Figures 8 and 8a, in a retracted and extended configuration, respectively;
Figures 11 and 11a are axonometric views of the device of Figures 8 and 8a assembled to a sash of a window and door, in a retracted and extended configuration, respectively, i.e. in an open and closed configuration of the sash of the window and door to which the device is assembled.

With reference to the accompanying figures, a motion multiplication device for a window or door has been indicated overall with 1.

In the following description, "profile" is intended to indicate a profile, e.g. made of PVC or aluminium, forming the support and containment frame of the panel(s) or slab(s) forming a sash of the casement window or door. Such a profile also forms the casement of the window and door, understood as that part of the sash that, during closure, matches with the doorframe, the sill and the lintel, or with another sash.

The motion multiplication device 1 for windows or doors comprises a plurality of balls 5, 57, 59 recirculating along a ring path 4 defined in a containment body adapted to move forward as a consequence of a thrust applied to it. The aforesaid balls 5, 57, 59 are configured to recirculate within the ring path 4 following the advancement motion of the containment body. The recirculation movement of the balls 5, 57, 59 within the ring path 4 is adapted to transmit a further relative forward motion to a driven element, so that said driven element advances by an amount greater than the amount of advancement of said containment body.

Advantageously, the ring path 4 constitutes a recirculation circuit of the balls 5, 57, 59 contained therein.

In essence, as will be further explained below, a movement range imposed on the containment body results in an additional relative movement range of the driven element. In fact, a first range of the containment body causes the balls 5, 57, 59 to recirculate along the ring path 4 for an equal second range, so that the driven element is dragged for a total range equal to twice the range imposed on the containment body.

The device 1 therefore acts as a movement multiplier.

The present invention also concerns an assembly arrangement of a motion multiplication device 1 for a window or door comprising at least one profile 100, wherein:
- the containment body is associated with a control rod 106, in turn associated with a movement device 101 fixed to the profile 100 and operated by means of a handle 102 or a lever;
- the driven element is associated with a closing element 111 of the window or door;
- the device 1, and in particular a component thereof, as explained below, is fixed to the profile 100 of said window or door.

Advantageously, the device 1 comprises:
- a base body 7 comprising a base slider 70, wherein said base body 7 is adapted to be fixed to a profile 100 of a window or door;
- an intermediate body 6, which constitutes the aforesaid containment body, within which the ring path 4 containing the plurality of balls 5, 57, 59 recirculating along the ring path 4 itself is realized;
- a covering body 9, which constitutes the aforesaid driven element, sliding with respect to the intermediate body 6 and comprising a first slider 90 integral with the covering body 9 itself.

The base slider 70 is slidable along a first section 71 of the ring path 4, while the first slider 90 is slidable along a second section 91 of the ring path 4.

The base slider 70 and the first slider 90 are both inserted, in two distinct points 72, 92 of the ring path 4, between respective two contiguous balls 57, 59 of said plurality of balls 5, 57, 59 recirculating along the ring path 4.

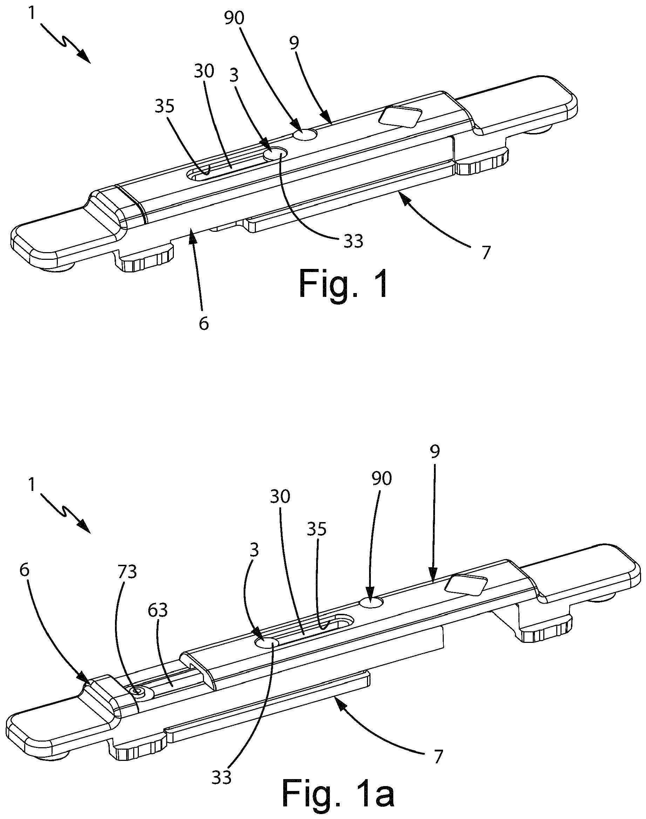

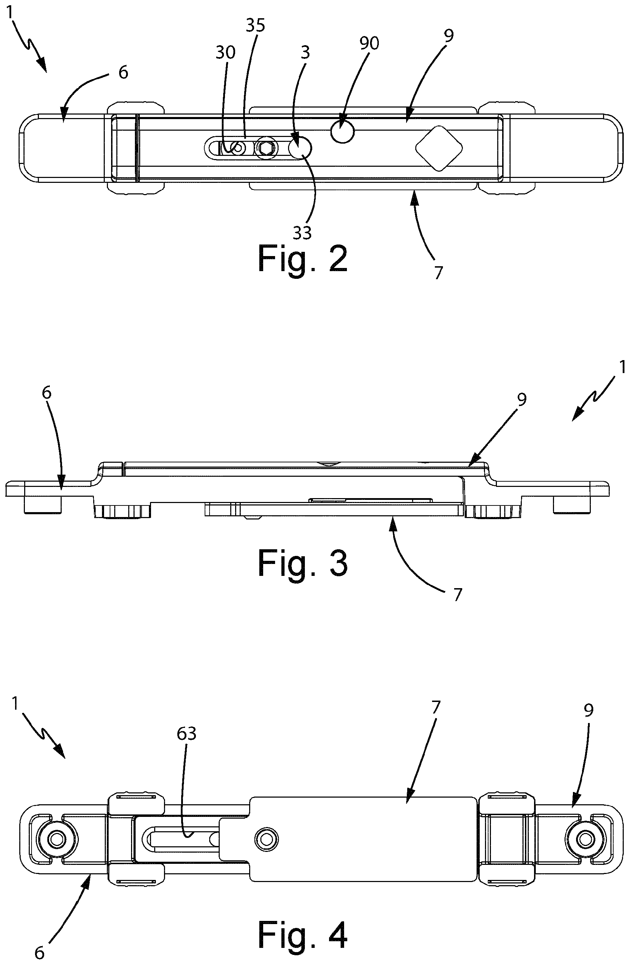

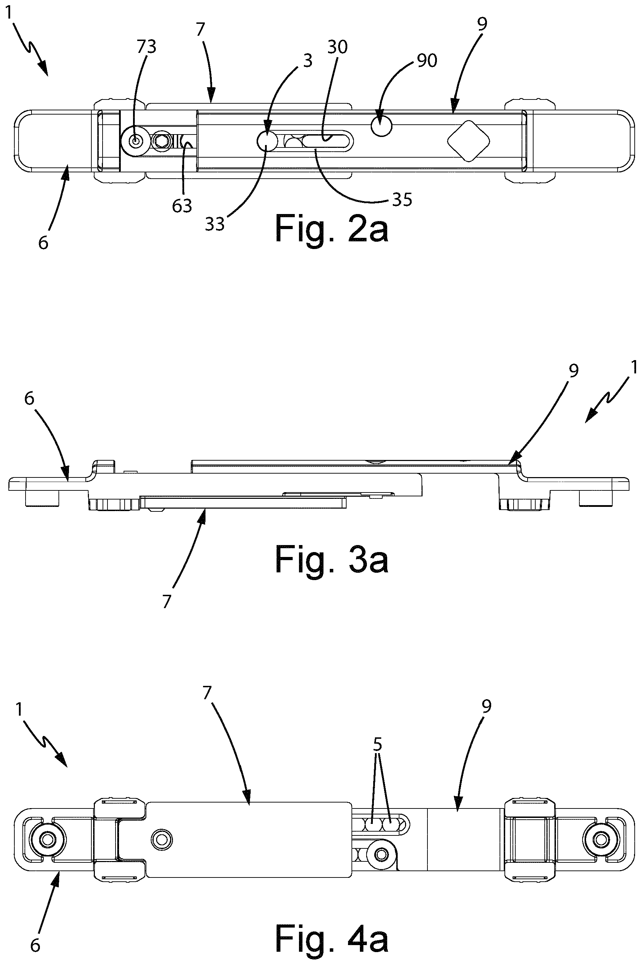

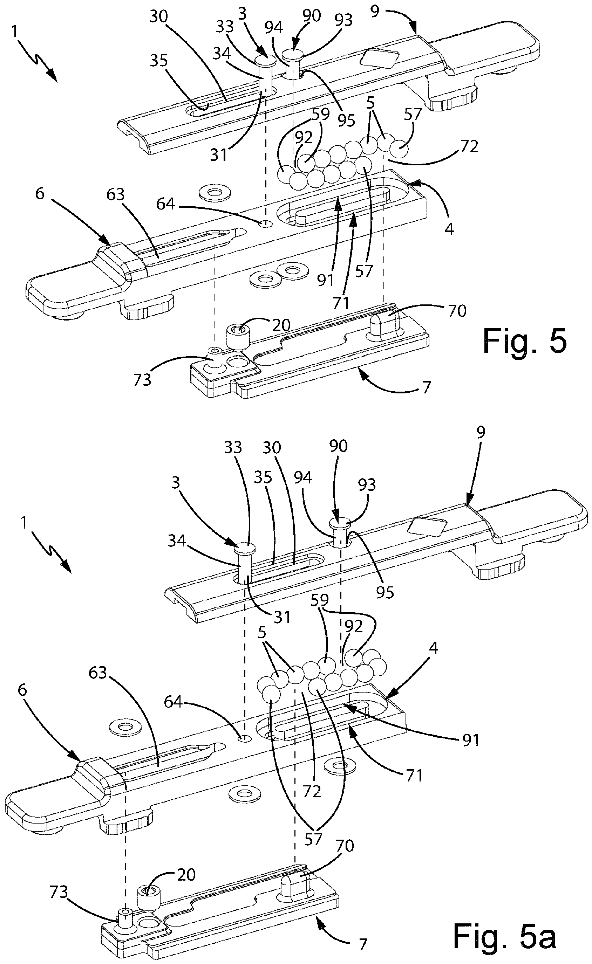

The movement of the intermediate body 6, e.g. from left to right with reference to Figures 1 to 5a, causes a relative movement of the base slider 70 along the first section 71 of the ring path 4, which relative movement causes a recirculation movement of the plurality of balls 5, 57, 59 along the ring path 4, which recirculation movement causes in turn a movement of the first slider 90 of the covering body 9 along the second section 91 of the ring path 4.

In essence, a movement range imposed on the intermediate body 6 involves a double movement range of the covering body 9. In fact, a first range of the intermediate body 6 causes the balls 5, 57, 59 to recirculate along the ring path 4 for an equal second range, so that the covering body 9 is dragged for a total range equal to twice the range imposed on the intermediate body 6.

Advantageously, with a movement range imposed on the intermediate body 6 equal to about 17 mm, an overall range of the covering body 9 equal to about 34 mm is obtained.

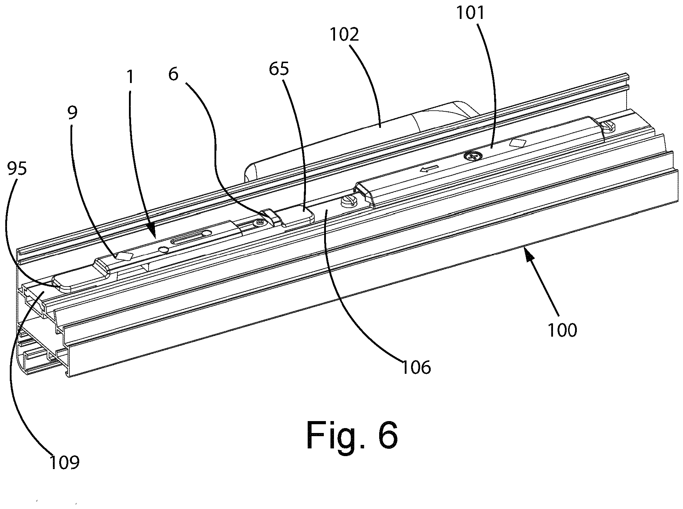

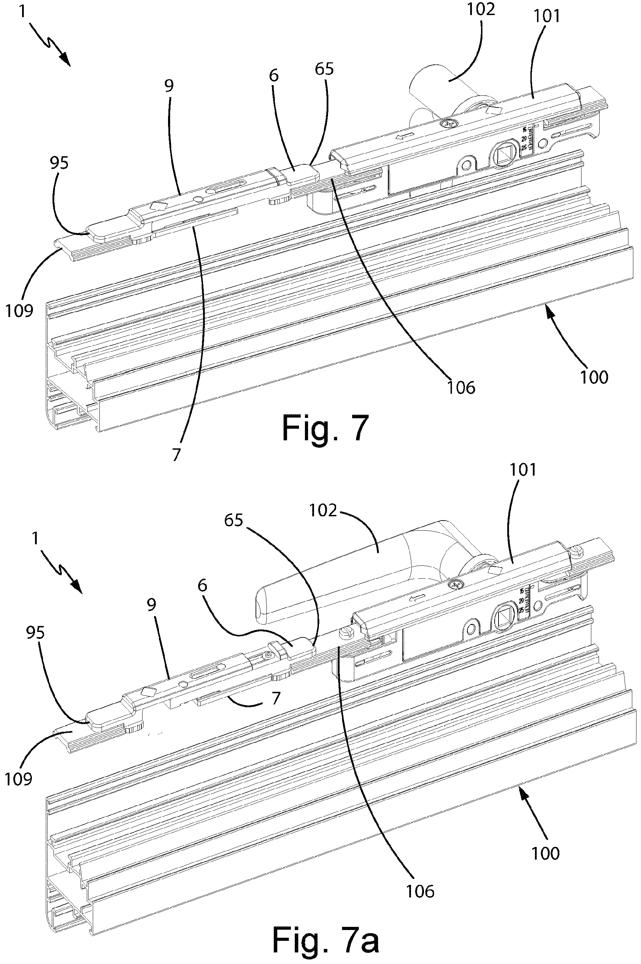

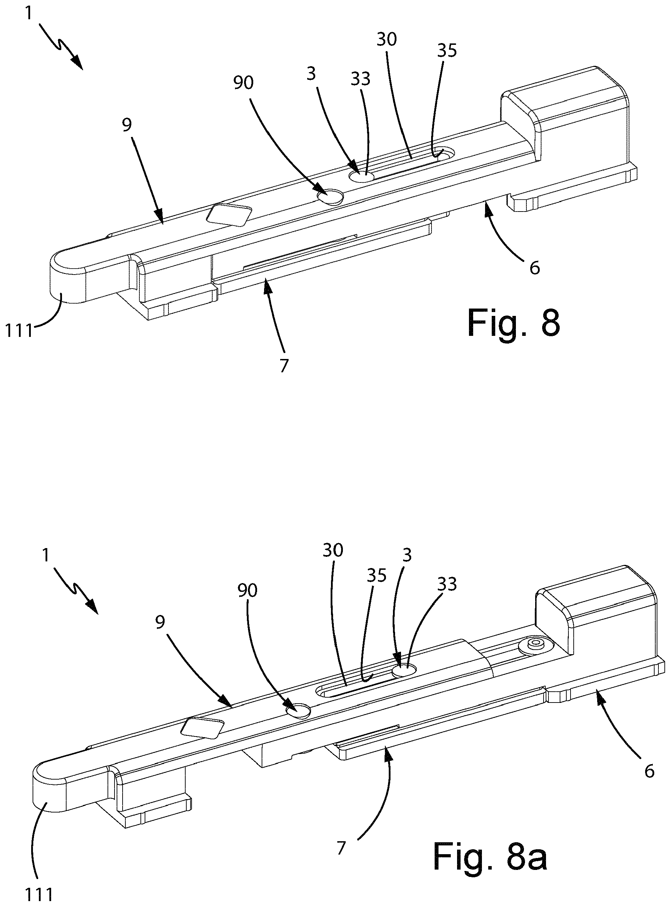

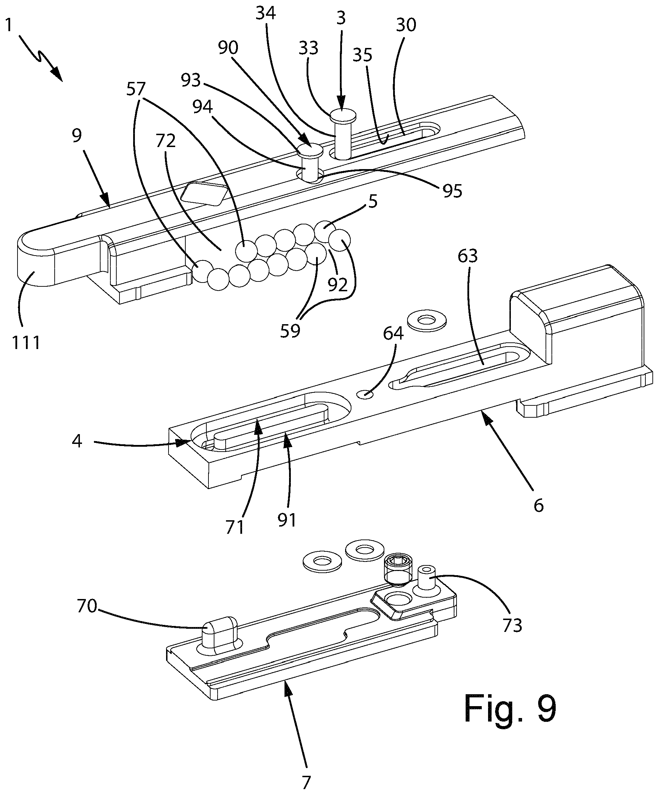

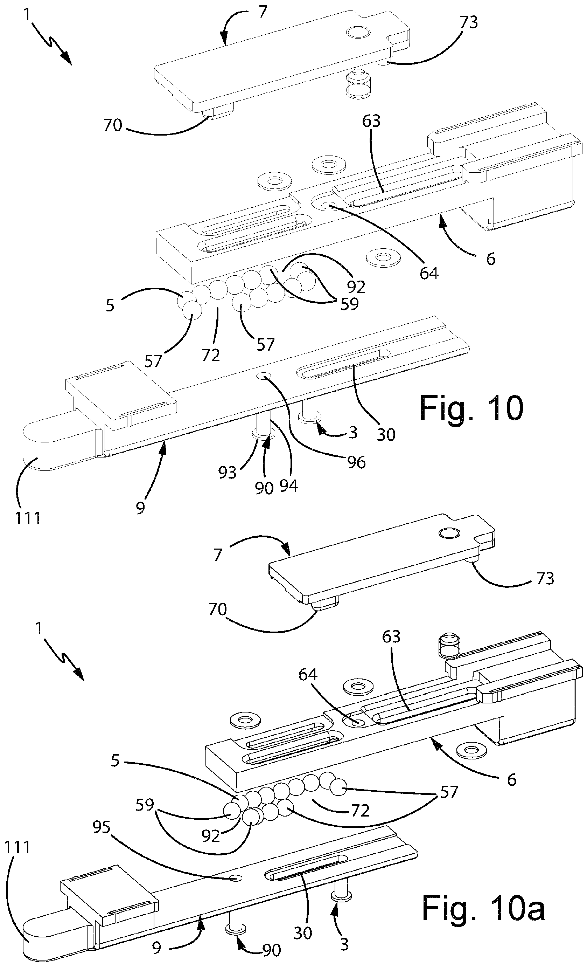

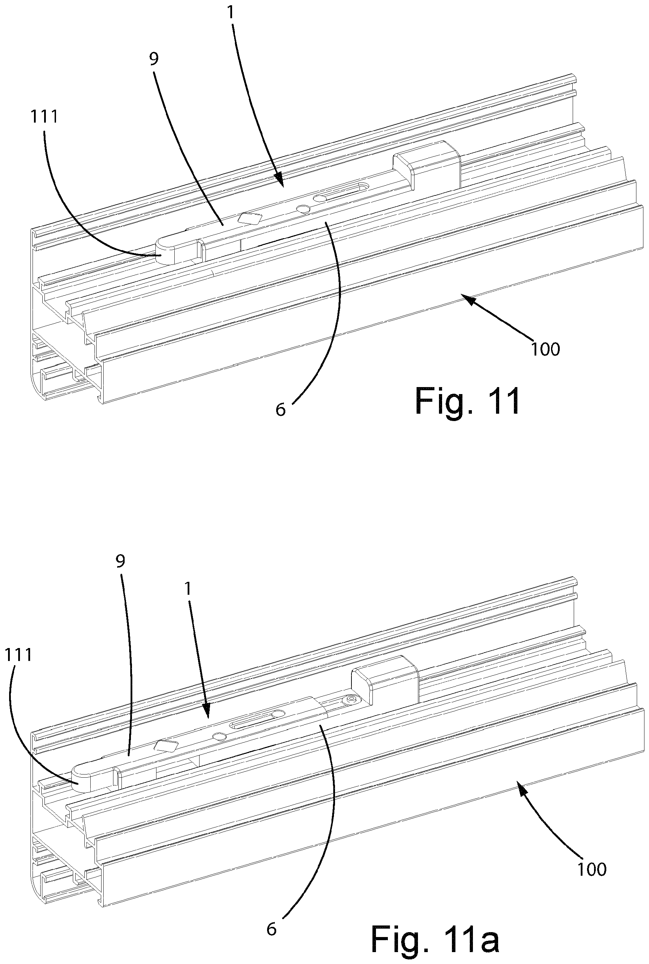

Advantageously, in the assembly arrangement of the device 1 in a window or door comprising at least one profile 100:
- the intermediate body 6 has a longitudinal end 65 associated with a control rod 106 in turn associated with a movement device 101 fixed to the profile 100 and operated by means of a handle 102 or a lever;
- the covering body 9 has a longitudinal end 95 associated with a closing element 111 of the window or door, e.g. by means of a driven rod 109, as illustrated in Figures 6, 7 and 7a, or directly, as illustrated in Figures 8 to 11a;
- the base body 7 is fixed to the profile 100 of the window or door.

Generally, a normal cremone/hammer handle moves the relative control rod 106 by about 17 mm through the movement device 101. The use of the multiplication device 1 makes it possible to double the movement range of the closing element 111 of the window or door, or of the relative driven rod 109, to about 34 mm.

Advantageously, the driven element, specifically the covering body 9, and the containment body, specifically the intermediate body 6, are coupled to each other by means of a linear guide coupling that allows the reciprocal longitudinal sliding thereof.

Advantageously, the covering body 9 comprises a second slider 3 movable with respect to the covering body 9 itself along a guide 30 obtained in the covering body 9. The second slider 3 comprises an end 31 integral with the intermediate body 6.

Preferably, the guide 30 is a straight guide.

Advantageously, the end 31 of the second slider 3 engages integrally in a seat 64 obtained in the intermediate body 6, for example by means of a threaded coupling.

Advantageously, the base body 7 comprises a guide slider 73 sliding in a linear guide 63 obtained in the intermediate body 6.

Advantageously, the base body 7 comprises at least one dowel 20 adapted to allow the fixing of the base body 7 to a profile 100 of a window or door, preferably of the type of an Allen screw.

Advantageously, the first section 71 and the second section 91 are straight sections.

Advantageously, the first section 71 and the second section 91 of the ring path 4 are parallel to the sliding direction (understood as a straight line) of the covering body 9 with respect to the intermediate body 6, as well as to the sliding direction of the intermediate body 6 with respect to the base body 7.

Advantageously, the ring path 4 is comprised of two segments, preferably parallel, joined to each other by two curves, preferably in a semicircle.

The first section 71 of the ring path 4, along which the base slider 70 slides, can be obtained in correspondence with a first segment of said two segments, while the second section 91 of the ring path 4, along which the first slider 90 slides, can be obtained in correspondence with a second segment of said two segments.

Thanks to the recirculation movement of the balls 5, 57, 59 present in the ring path 4, the base slider 70 moves, along the first section 71, in a longitudinal direction with opposite direction with respect to the direction of movement of the first slider 90 along the second section 91.

Advantageously, the first slider 90 may comprise a head 93 which is inserted into a corresponding seat 95 obtained in the covering body 9, and a stem 94 whose end is inserted between the balls 59 at the point 92 of the ring path 4, where the stem crosses a through hole 96 obtained in the covering body 9. The first slider 90 is integral in translation with the covering body 9.

Advantageously, the second slider 3 comprises a head 33 that moves along a peripheral stop step 35 obtained in the guide 30, and a stem 34 that engages, for example by means of a threaded coupling, inside the seat 64 of the intermediate body 6. The second slider 3 is slidable with respect to the covering body 9 and integral in translation to the intermediate body 6.

Advantageously, the device 1 may comprise an element for closing the window or door associated with an end 95 of the covering body 9.

In particular, as illustrated in Figures 8 to 11a with reference to the second embodiment, the device 1 may comprise a closure tip 111 associated with the end 95 of the covering body 9, and preferably realized as one piece with the covering body 9.

In this way, the movement range of the end 65 of the intermediate body 6 results in a doubled range of the closure tip 111.

The device 1 finds application in the systems with closure through handles, but also in all those systems where it is necessary to increase the stroke of the rod, for example one-way or two-way poles, lever poles, locks with rods, closures for slides.

The assembly and the operation of the device 1 according to the present invention are immediately understandable to the person skilled in the art from the description made above, with particular reference to the two exemplary embodiments illustrated and described.

The object of the present invention has the advantage of constituting an accessory that can be easily applied to existing windows and doors in order to improve their operation, for example as a result of settling and wears of the closure components of the same window and door that occurs over time.

Another advantage of the present invention consists in the fact that the multiplication of the motion can be obtained in a mechanically very robust manner, in an absolutely small overall dimensions and with reduced frictional forces.

The object of the present invention thus makes it possible to realize motion multiplication mechanisms that are very resistant and not subject to breakage, which can also be applied to existing windows and doors if necessary, for example by simply modifying the manoeuvring rods that transmit the motion from the movement device associated with the handle of the window or door.

The motion multiplication device for a window and door as conceived herein is susceptible to several modifications and variations, all falling within the invention as defined by the claims.

In practice, the materials used, as well as their dimensions, can be of any type according to the technical requirements.

## Claims

1. Motion multiplication device (1) for windows or doors comprising a plurality of balls (5, 57, 59) recirculating along a ring path (4), said ring path (4) being defined in a containment body adapted to move forward as a consequence of a thrust applied to it, said balls (5, 57, 59) being configured to recirculate within said ring path (4) following said advancement motion of said containment body, said recirculation movement of said balls (5, 57, 59) within said ring path (4) being adapted to transmit a further relative forward motion to a driven element, so that said driven element advances by an amount greater than the amount of advancement of said containment body.

2. Device (1) according to claim 1, comprising:
- a base body (7) comprising a base slider (70), said base body (7) being adapted to be fixed to a profile (100) of a window or door;
- an intermediate body (6) within which said ring path (4) comprising said plurality of balls (5, 57, 59) recirculating along said ring path (4) is realized, said intermediate body (6) constituting said containment body;
- a covering body (9) sliding with respect to said intermediate body (6) and comprising a first slider (90) integral with said covering body (9), said covering body (9) constituting said driven element; said base slider (70) being slidable along a first section (71) of said ring path (4);
said first slider (90) being slidable along a second section (91) of said ring path (4);
said base slider (70) and said first slider (90) being both inserted, in two distinct points (72,92) of said ring path (4), between respective two contiguous balls (57, 59) of said plurality of balls (5, 57, 59) recirculating along said ring path (4),
wherein the movement of said intermediate body (6) causes a relative movement of said base slider (70) along said first section (71) of said ring path (4), which relative movement causes a recirculation movement of said plurality of balls (5, 57, 59) along said ring path (4), which recirculation movement causes in turn a movement of said first slider (90) of said covering body (9) along said second section (91) of said loop path (4).

3. Device (1), according to claim 2, **characterized in that** said covering body (9) and said intermediate body (6) are coupled to each other by means of a linear guide coupling.

4. Device (1), according to claim 2 or 3, **characterized in that** said covering body (9) comprises a second slider (3) movable with respect to said covering body (9) along a guide (30) obtained in said covering body (9), said second slider (3) comprising an end (31) integral with said intermediate body (6).

5. Device (1), according to claim 4, **characterized in that** said end (31) of said second slider (3) engages integrally in a seat (64) obtained in said intermediate body (6).

6. Device (1), according to one or more of the preceding claims, **characterized in that** said base body (7) comprises a guide slider (73) sliding in a linear guide (63) realized in said intermediate body (6).

7. Device (1), according to one or more of the preceding claims, **characterized in that** said base body (7) comprises at least one dowel (20) adapted to allow the fixing of said base body (7) to a profile (100) of a window or door.

8. Device (1), according to one or more of the preceding claims, **characterized in that** said ring path (4) is comprised of two segments joined to each other by two curves, preferably in a semicircle, said first section (71) of said ring path (4) being realized in correspondence with a first segment of said two segments, said second section (91) of said ring path (4) being realized in correspondence with a second segment of said two segments.

9. Device (1), according to one or more of the preceding claims, **characterized in that** it comprises a closure tip (111) associated with one end (95) of said covering body (9).

10. Assembly arrangement of a motion multiplication device (1) for a window or door according to one or more of the preceding claims, in a window or door comprising at least one profile (100), wherein:
- said containment body is associated with a control rod (106), associated with a movement device (101) fixed to said profile (100) and operated by means of a handle (102) or a lever;
- said driven element is associated with a closing element (111) of said window or door;
- said device (1) is fixed to said profile (100) of said window or door.

11. Assembly arrangement of a motion multiplication device (1) for a window or door according to one or more of claims 2 to 9, in a window or door comprising at least one profile (100), wherein:
- said intermediate body (6) has a longitudinal end (65) associated with a control rod (106) associated with a movement device (101) fixed to said profile (100) and operated by means of a handle (102) or a lever;
- said covering body (9) has a longitudinal end associated with a closing element (111) of said window or door;
- said base body (7) is fixed to said profile (100) of said window or door.

## Patentansprüche

1. Bewegungsmultiplikationsvorrichtung (1) für Fenster oder Türen, die eine Vielzahl von Kugeln (5, 57, 59) umfasst, die entlang einer Ringbahn (4) umlaufen, wobei die Ringbahn (4) in einem Aufnahmekörper definiert ist, der so angepasst ist, dass er sich als Folge eines auf ihn ausgeübten Schubs vorwärts bewegt, wobei die Kugeln (5, 57, 59) so konfiguriert sind, dass sie innerhalb der Ringbahn (4) im Anschluss an die Vorwärtsbewegung des Aufnahmekörpers umlaufen, wobei die Umlaufbewegung der Kugeln (5, 57, 59) innerhalb der Ringbahn (4) so angepasst ist, dass sie eine weitere relative Vorwärtsbewegung auf ein angetriebenes Element überträgt, so dass das angetriebene Element um einen Betrag vorrückt, der größer ist als der Betrag der Vorwärtsbewegung des Aufnahmekörpers.

2. Vorrichtung (1) nach Anspruch 1, umfassend:
- einen Basiskörper (7), umfassend einen Basisschieber (70), wobei der Basiskörper (7) so angepasst ist, dass er an einem Profil (100) eines Fensters oder einer Tür befestigt wird;
- einen Zwischenkörper (6), in dem die Ringbahn (4) mit der Vielzahl von Kugeln (5, 57, 59), die entlang der Ringbahn (4) umlaufen, realisiert ist, wobei der Zwischenkörper (6) den Aufnahmekörper bildet;
- einen Abdeckkörper (9), der in Bezug auf den Zwischenkörper (6) gleitet und einen ersten Schieber (90) umfasst, der mit dem Abdeckkörper (9) einstückig ist, wobei der Abdeckkörper (9) das angetriebene Element bildet;
wobei der Basisschieber (70) entlang eines ersten Abschnitts (71) der Ringbahn (4) verschiebbar ist;
wobei der erste Schieber (90) entlang eines zweiten Abschnitts (91) der Ringbahn (4) verschiebbar ist;
wobei der Basisschieber (70) und der erste Schieber (90) beide an zwei verschiedenen Punkten (72, 92) der Ringbahn (4) zwischen jeweils zwei aneinandergrenzenden Kugeln (57, 59) der Vielzahl von Kugeln (5, 57, 59), die entlang der Ringbahn (4) umlaufen, eingefügt sind,
wobei die Bewegung des Zwischenkörpers (6) eine Relativbewegung des Basisschiebers (70) entlang des ersten Abschnitts (71) der Ringbahn (4) bewirkt, dessen Relativbewegung eine Umlaufbewegung der Vielzahl von Kugeln (5, 57, 59) entlang der Ringbahn (4) bewirkt, wobei die Umlaufbewegung wiederum eine Bewegung des ersten Schiebers (90) des Abdeckkörpers (9) entlang des zweiten Abschnitts (91) der Schleifenbahn (4) bewirkt.

3. Vorrichtung (1) nach Anspruch 2, **dadurch gekennzeichnet, dass** der Abdeckkörper (9) und der Zwischenkörper (6) mittels einer Linearführungskupplung miteinander gekoppelt sind.

4. Vorrichtung (1) nach Anspruch 2 oder 3, **dadurch gekennzeichnet, dass** der Abdecckörper (9) einen zweiten Schieber (3) umfasst, der in Bezug auf den Abdeckkörper (9) entlang einer in dem Abdeckkörper (9) ausgebildeten Führung (30) beweglich ist, wobei der zweite Schieber (3) ein mit dem Zwischenkörper (6) einstückiges Ende (31) umfasst.

5. Vorrichtung (1) nach Anspruch 4, **dadurch gekennzeichnet, dass** das Ende (31) des zweiten Schiebers (3) einstückig in einen Sitz (64) eingreift, der in dem Zwischenkörper (6) erhalten ist.

6. Vorrichtung (1) nach einem oder mehreren der vorstehenden Ansprüche, **dadurch gekennzeichnet, dass** der Grundkörper (7) einen Führungsschieber (73) umfasst, der in einer linearen Führung (63) gleitet, die in dem Zwischenkörper (6) realisiert ist.

7. Vorrichtung (1) nach einem oder mehreren der vorstehenden Ansprüche, **dadurch gekennzeichnet, dass** der Grundkörper (7) mindestens einen Dübel (20) umfasst, der geeignet ist, die Befestigung des Grundkörpers (7) an einem Profil (100) eines Fensters oder einer Tür zu ermöglichen.

8. Vorrichtung (1) nach einem oder mehreren der vorstehenden Ansprüche, **dadurch gekennzeichnet, dass** die Ringbahn (4) aus zwei Segmenten besteht, die durch zwei Kurven, vorzugsweise in einem Halbkreis, miteinander verbunden sind, wobei der erste Abschnitt (71) der Ringbahn (4) in Übereinstimmung mit einem ersten Segment der beiden Segmente realisiert ist, und der zweite Abschnitt (91) der Ringbahn (4) in Übereinstimmung mit einem zweiten Segment der beiden Segmente realisiert ist.

9. Vorrichtung (1) nach einem oder mehreren der vorstehenden Ansprüche, **dadurch gekennzeichnet, dass** sie eine Verschlussspitze (111) umfasst, die mit einem Ende (95) des Abdeckkörpers (9) verbunden ist.

10. Montageanordnung einer Bewegungsmultiplikationsvorrichtung (1) für ein Fenster oder eine Tür nach einem oder mehreren der vorstehenden Ansprüche, in einem Fenster oder einer Tür, das/die mindestens ein Profil (100) umfasst, wobei:
- der Aufnahmekörper mit einer Steuerstange (106) verbunden ist, die mit einer Bewegungsvorrichtung (101) verbunden ist, die an dem Profil (100) befestigt ist und durch einen Griff (102) oder einen Hebel betätigt wird;
- das angetriebene Element mit einem Verschlusselement (111) des Fensters oder der Tür verbunden ist;
- die Vorrichtung (1) an dem Profil (100) des Fensters oder der Tür befestigt ist.

11. Montageanordnung einer Bewegungsmultiplikationsvorrichtung (1) für ein Fenster oder eine Tür nach einem oder mehreren der Ansprüche 2 bis 9 in einem Fenster oder einer Tür, das/die mindestens ein Profil (100) umfasst, wobei:
- der Zwischenkörper (6) ein Längsende (65) aufweist, das mit einer Steuerstange (106) verbunden ist, die mit einer Bewegungsvorrichtung (101) verbunden ist, die an dem Profil (100) befestigt ist und durch einen Griff (102) oder einen Hebel betätigt wird;
- der Abdeckkörper (9) ein Längsende aufweist, das mit einem Verschlusselement (111) des Fensters oder der Tür verbunden ist;
- der Grundkörper (7) an dem Profil (100) des Fensters oder der Tür befestigt ist.

## Revendications

1. Dispositif de multiplication de mouvement (1) pour fenêtres ou portes comprenant une pluralité de billes (5, 57, 59) recirculant le long d'un trajet annulaire (4), ledit trajet annulaire (4) étant défini dans un corps de confinement conçu pour se déplacer vers l'avant en conséquence d'une poussée qui lui est appliquée, lesdites billes (5, 57, 59) étant configurées pour recirculer à l'intérieur de ladite voie annulaire (4) à la suite dudit mouvement d'avance dudit corps de confinement, ledit déplacement de recirculation desdites billes (5, 57, 59) à l'intérieur de ladite voie annulaire (4) étant conçu pour transmettre un mouvement relatif supplémentaire vers l'avant à un élément entraîné, de sorte que ledit élément entraîné avance d'une quantité supérieure à la quantité d'avance dudit corps de confinement.

2. Dispositif (1) selon la revendication 1, comprenant:
- un corps de base (7) comprenant un coulisseau de base (70), ledit corps de base (7) étant conçu pour être fixé à un profilé (100) d'une fenêtre ou d'une porte;
- un corps intermédiaire (6) à l'intérieur duquel est réalisé ledit trajet annulaire (4) comprenant ladite pluralité de billes (5, 57, 59) recirculant le long dudit trajet annulaire (4), ledit corps intermédiaire (6) constituant ledit corps de confinement;
- un corps de couverture (9) coulissant par rapport audit corps intermédiaire (6) et comprenant un premier coulisseau (90) solidaire dudit corps de couverture (9), ledit corps de couverture (9) constituant ledit élément entraîné;
ledit coulisseau de base (70) pouvant coulisser le long d'une première section (71) du trajet annulaire (4);
ledit premier coulisseau (90) pouvant coulisser le long d'une deuxième section (91) du trajet annulaire (4);
ledit coulisseau de base (70) et ledit premier coulisseau (90) étant tous deux insérés, en deux points distincts (72, 92) dudit trajet annulaire (4), entre deux billes contiguës (57, 59) respectives de ladite pluralité de billes (5, 57, 59) circulant le long dudit trajet annulaire (4),
dans lequel le déplacement dudit corps intermédiaire (6) provoque un déplacement relatif dudit coulisseau de base (70) le long de la première section (71) dudit trajet annulaire (4), lequel déplacement relatif provoque un déplacement de recirculation de ladite pluralité de billes (5, 57, 59) le long dudit trajet annulaire (4), lequel déplacement de recirculation provoque à son tour un déplacement dudit premier coulisseau (90) dudit corps de couverture (9) le long de la deuxième section (91) dudit trajet annulaire (4).

3. Dispositif (1), selon la revendication 2, **caractérisé en ce que** ledit corps de couverture (9) et ledit corps intermédiaire (6) sont couplés l'un à l'autre au moyen d'un couplage à guidage linéaire.

4. Dispositif (1), selon la revendication 2 ou la revendication 3, **caractérisé en ce que** ledit corps de couverture (9) comprend un deuxième coulisseau (3) mobile par rapport audit corps de couverture (9) le long d'un guide (30) obtenu dans ledit corps de couverture (9), ledit deuxième coulisseau (3) comprenant une extrémité (31) solidaire dudit corps intermédiaire (6).

5. Dispositif (1), selon la revendication 4, **caractérisé en ce que** ladite extrémité (31) dudit deuxième coulisseau (3) s'engage intégralement dans un siège (64) obtenu dans ledit corps intermédiaire (6).

6. Dispositif (1), selon l'une ou plusieurs des revendications précédentes, **caractérisé en ce que** ledit corps de base (7) comprend un coulisseau de guidage (73) coulissant dans un guide linéaire (63) réalisé dans ledit corps intermédiaire (6).

7. Dispositif (1), selon l'une ou plusieurs des revendications précédentes, **caractérisé en ce que** ledit corps de base (7) comprend au moins une cheville (20) conçue pour permettre la fixation dudit corps de base (7) à un profilé (100) d'une fenêtre ou d'une porte.

8. Dispositif (1), selon l'une ou plusieurs des revendications précédentes, **caractérisé en ce que** ledit trajet annulaire (4) est constitué de deux segments reliés entre eux par deux courbes, de préférence en demi-cercle, ladite première section (71) dudit trajet annulaire (4) étant réalisée en correspondance avec un premier segment desdits deux segments, ladite deuxième section (91) dudit trajet annulaire (4) étant réalisée en correspondance avec un deuxième segment desdits deux segments.

9. Dispositif (1), selon l'une ou plusieurs des revendications précédentes, **caractérisé en ce qu'**il comprend un embout de fermeture (111) associé à une extrémité (95) dudit corps de couverture (9).

10. Montage d'un dispositif de multiplication de mouvement (1) pour fenêtre ou porte selon une ou plusieurs des revendications précédentes, dans une fenêtre ou une porte comprenant au moins un profiléé (100), dans lequel:
- ledit corps de confinement est associé à une tige de commande (106), associée à un dispositif de déplacement (101) fixé audit profilé (100) et actionné au moyen d'une poignée (102) ou d'un levier;
- ledit élément entraîné est associé à un élément de fermeture (111) de ladite fenêtre ou porte;
- ledit dispositif (1) est fixé audit profilé (100) de ladite fenêtre ou porte.

11. Montage d'un dispositif de multiplication de mouvement (1) pour une fenêtre ou une porte selon une ou plusieurs des revendications 2 à 9, dans une fenêtre ou une porte comprenant au moins un profilé (100), dans lequel:
- ledit corps intermédiaire (6) a une extrémité longitudinale (65) associée à une tige de commande (106) associée à un dispositif de déplacement (101) fixé audit profilé (100) et actionné au moyen d'une poignée (102) ou d'un levier;
- ledit corps de couverture (9) a une extrémité longitudinale associée à un élément de fermeture (111) de ladite fenêtre ou porte;
- ledit corps de base (7) est fixé au profilé (100) de ladite fenêtre ou porte.
